# EUROPÄISCHE PATENTSCHRIFT

(11) **EP 3 193 199 B1**
(45) Veröffentlichungstag und Bekanntmachung des Hinweises auf die Patenterteilung: **02.05.2018**
(21) Anmeldenummer: 17000060.8
(22) Anmeldetag: 13.01.2017
(51) Int. Cl.: G02B 6/44, G02B 6/28, G02B 6/293

(54) **KASSETTE MIT EINEM PWDM-FILTER**
CASSETTE WITH PWDM FILTER
CASSETTE COMPRENANT UN FILTRE DE MODULATIONS D'IMPULSIONS EN LARGEUR

(30) Priorität: 18.01.2016 DE 102016000341
(43) Veröffentlichungstag der Anmeldung: 19.07.2017
(73) Patentinhaber: Langmatz GmbH, 82467 Garmisch-Partenkirchen (DE)
(72) Erfinder: Ertl, Werner, 82490 Farchant (DE)
(74) Vertreter: Flosdorff, Jürgen

(56) Entgegenhaltungen:
- WO-A2-2009/055283
- US-A1- 2015 117 829

## Beschreibung

Die Erfindung betrifft eine Kassette mit einer Grundplatte und einem pWDM-Filter (parallel Wavelength Division Multiplexer) für Glasfasern. Der pWDM-Filter kann als Multiplexer verwendet werden, um die unterschiedlichen Wellenlängen von mit dem Filter verbundenen Glasfasern in eine einzige Faser einzukoppeln oder aber auf ähnliche Weise als Demultiplexer, um mehrere Wellenlängen aus der ankommenden Glasfaser zu trennen, indem diese in die abgehenden Fasern eingekoppelt werden. Der pWDM-Filter ist als Multiplexer demnach eine optische Vorrichtung, die mehrere optische Strahlen in einer einzigen Faser kombiniert, oder ein Demultiplexer, der die optischen Strahlen einer einzigen Faser auf mehrere Fasern aufteilt.
Kassetten der betrachteten Art werden meist in einen Glasfaser-Verteilungsrahmen mit mehreren übereinander angeordneten Fächern oder Paneelen aufgenommen, die jeweils mehrere Kassetten enthalten. Die Höhe eines solchen optischen Verteilungsrahmens ist begrenzt, weshalb nur eine bestimmte maximale Anzahl von Fächern übereinander gestapelt werden können. Dabei besteht das Bedürfnis nach einer hohen Packungsdichte und einer guten Handhabbarkeit der Glasfasern in dem optischen Verteiler.

Der Stand der Technik beschrieben in WO 2009/055283 A2 zeigt eine Kassette mit einer Grundplatte und einem WDM-Filter für Glasefasern wobei die Grundplatte eine Vorderseite und eine Rückseite aufweist, und wobei der WDM-Filter auf einer der beiden Seiten angeordnet ist. US2015/0117829 A1 offenbart eine Kassette mit einer Grundplatte, wobei Glasfasern an der Vorderseite und der Rückseite der Grundplatte angeordnet sein können.

Der vorliegenden Erfindung liegt die Aufgabe zugrunde, eine derartige Kassette anzugeben, die über eine kompakte Ausgestaltung eine hohe Packungsdichte erreicht.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass an beiden Seiten der Kassette mehrere Glasfasern angeordnet sind, die zu dem pWDM-Filter verlaufen, dass der Filter an gegenüberliegenden Endbereichen mehrere Glasfaser-Kontakte für die Glasfasern der beiden Seiten der Kassette und einen Glasfaser-Kabelkontakt für ein angeschlossenes Glasfaser-Kabel aufweist, und dass der Filter so in einer Aussparung der Grundplatte angeordnet ist, dass die Glasfaser-Kontakte der gegenüberliegenden Endbereiche des Filters von beiden Seiten der Kassette aus für die jeweiligen Glasfasern zum Anschluss zugänglich sind. In dem pWDM-Filter werden entweder die optischen Signale der an beiden Seiten der Grundplatte angeordneten Glasfasern, die jeweils eine bestimmte Wellenlänge haben, auf die Glasfaser des abgehenden Glasfaser-Kabels übertragen oder die Signale des ankommenden Glasfaser-Kabels werden entsprechen getrennt.

Das Glasfaser-Kabel enthält nur eine einzige Glasfaser, die jedoch zur Streckenübertragung mit einer ausreichend dicken Ummantelung versehen ist. Die mehreren Glasfasern der beiden Seiten der Kassette benötigen nicht eine derart robuste, dicke Ummantelung, da diese Glasfasern zur Verteilung ihrer optischen Signale im Bereich von Hausabschlusspunkten oder Glasfaser-Netzverteilern vorgesehen sind.

Die Glasfasern für die einzelnen Wellenbereiche sind vorzugsweise jeweils zur Hälfte auf einer der Seiten der Grundplatte angeordnet und gehalten, wozu Führungs- und Halteelemente an der Grundplatte befestigt oder angeformt sind.

Das Glasfaser-Kabel mit den Signalen aller Wellenlängen ist auf einer Seite der Grundplatte angeordnet und verlässt die Kassette durch einen anderen Ausgang als die anderen Glasfasern.

In einer Ausführungsform ist vorgesehen, dass der pWDM-Filter derart geneigt in oder an der Aussparung der Grundplatte angeordnet ist, dass die Glasfaser-Kontakte der beiden Endbereiche jeweils an einer Seite über die Grundplatte hinaus ragen. Damit können die Glasfasern der beiden Seiten der Kassette auf bequeme Weise mit den zugehörigen Kontakten des pWDM-Filters verbunden werden.

Dadurch, dass die Glasfasern für die jeweiligen Wellenlängen bevorzugt jeweils zur Hälfte an beiden Seiten der Kassette angeordnet sind, kann diese eine kompakte Form mit verhältnismäßig geringen Abmessungen haben, so dass die Kassetten mit einer hohen Packungsdichte in einem zugehörigen Glasfaser-Verteilungsrahmen untergebracht werden können.

In weiterer Ausgestaltung der Erfindung kann vorgesehen sein, dass der pWDM-Filter um seine Mittelachse bzw. Symmetrieachse bezüglich der Glasfaser-Kontakte beider Seiten gekippt bzw. geneigt angeordnet ist. Der Winkel, in dem der Filter zu der Grundplatte angeordnet ist, beträgt zweckmäßigerweise etwa 2° bis 3°, vorzugsweise 2,6°.

Damit der Filter in der schrägen Lage stabil an der Grundplatte befestigt ist, kann er auf wenigstens einer schrägen streifenförmigen Auflage aufliegen und in dieser Position an der Grundplatte angeschraubt sein.

In einer bevorzugten Ausführungsform der Erfindung ist der pWDM-Filter in der Ebene der Grundplatte innerhalb der Aussparung angeordnet, wobei die Aussparung so weit über die Glasfaser-Kontakte hinaus ragt, dass die Glasfasern in die zugehörigen Kontakte eingesteckt werden können.

Bevorzugt ist vorgesehen, dass die optischen Signale des Glasfaserkabels auf acht Glasfasern mit unterschiedlichen Wellenlängen aufgeteilt werden. Umgekehrt können die acht optischen Datensignale kombiniert und an die Glasfaser des Glasfaserkabels übertragen werden.

Damit die beiden Seiten der Kassette bequem bedienbar sind, ist die Kassette nach einem weiteren Vorschlag der Erfindung an einem Randabschnitt schwenkbar auf einer vorzugsweise schubladenartig ausziehbaren Platte eines Glasfaser-Verteilungsrahmens befestigt.

Eine Ausführungsform der erfindungsgemäßen Kassette wird nachfolgend mit Bezug auf die Zeichnungen näher erläutert. Dabei zeigen:
- Figuren 1 und 2: die beiden Seiten der Kassette mit weg gelassenen Bauteilen;
- Figur 3: eine schematisch angedeutete Zusammenschau der Figuren 1 und 2;

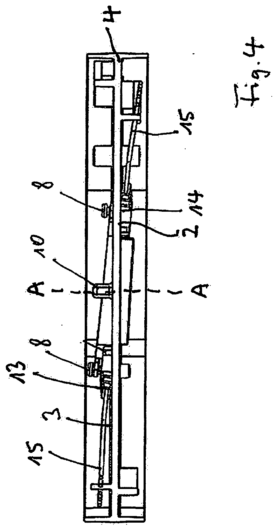

- Figur 4: einen Vertikalschnitt durch den Bereich des pWDM-Filters in vergrößerter Darstellung;
- Figur 5: eine Darstellung ähnlich Figur 1, mit allen Bauteilen;
- Figur 6: eine Darstellung ähnlich Figur 2, mit allen Bauteilen, in verkleinerter Darstellung.

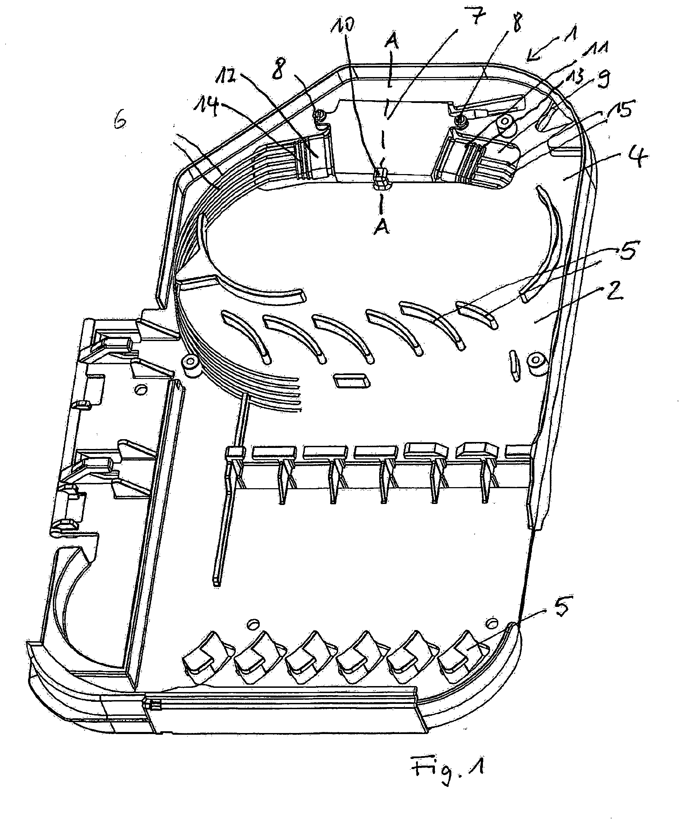

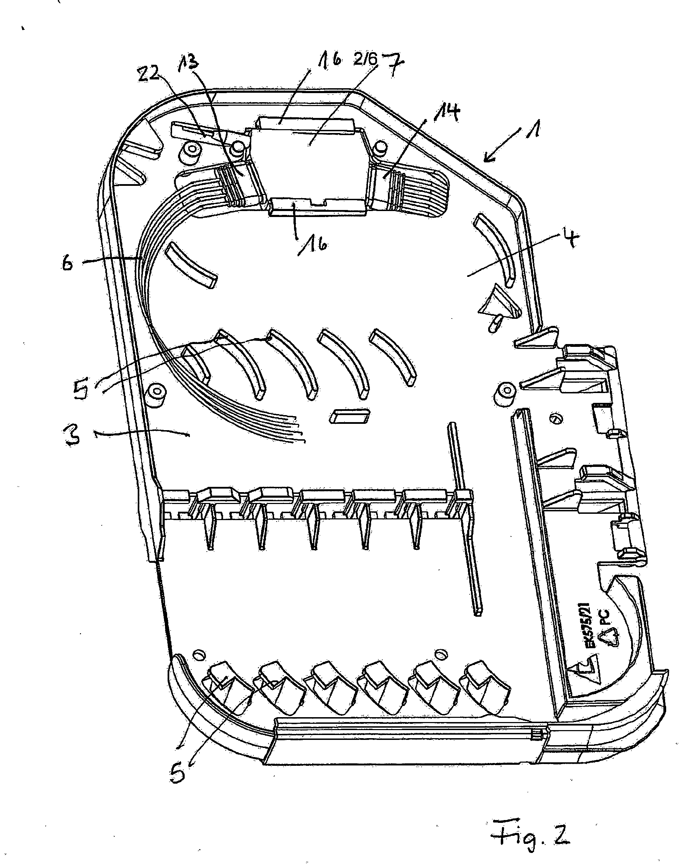

Die in den Figuren 1 und 2 dargestellte Kassette 1 enthält eine Grundplatte 4, auf der auf der Vorderseite 2 und auf der Rückseite 3 mehrere Führungselemente 5 befestigt sind, die dazu dienen, mehrere Glasfasern 6 einem pWDM-Filter 7 zuzuführen. Der pWDM-Filter 7 ist mittels Schrauben 8 am Rand einer Aussparung 9 in der Grundplatte 4 befestigt und außerdem von einem winkelförmigen Halteelement 10 der Grundplatte 4 übergriffen und damit stabil fixiert.

Der pWDM-Filter 7 hat an zwei diametral gegenüber liegenden Endbereichen 11, 12 Kontakte 13, 14 zur Verbindung mit ankommenden Glasfasern 6, die jeweils optische Signale einer bestimmten Wellenlänge oder Wellenlängenbereichs führen.

Damit die Glasfasern 6 der beiden Seiten 2 und 3 mit den beiden Glasfaser-Kontakten 13, 14 verbunden werden können, ist der pWDM-Filter 7 derart um seine Mittelachse A geschwenkt in der Aussparung 9 angeordnet, dass die Glasfaser-Kontakte 13 an der Rückseite 3 und die Glasfaser-Kontakte 14 an der Vorderseite 2 über die Grundplatte 4 hinaus ragen, so dass die Glasfasern 6 beider Seiten auf einfache Weise mit den jeweils zugehörigen Glasfaser-Kontakten 13, 14 verbindbar sind. Die optimale Neigung des pWDM-Filters 7 gegenüber der Grundplatte 4 beträgt 2° bis 3°, vorzugsweise 2,6°.

Der Filter liegt auf schrägen streifenförmigen Auflagern 16 oder auf Ansätzen am Rand der Aussparung auf und ist mit Schrauben 8 befestigt.

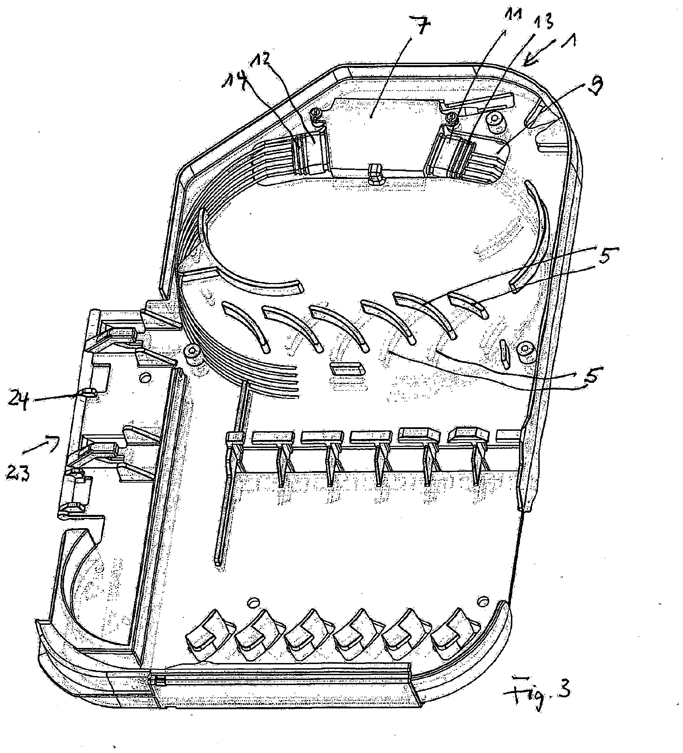

Figur 3 zeigt, dass die Führungselemente 5 an beiden Seiten 2, 3 angeordnet sind, was aus den durchgezogenen und gepunkteten Linien der Figur erkennbar ist.

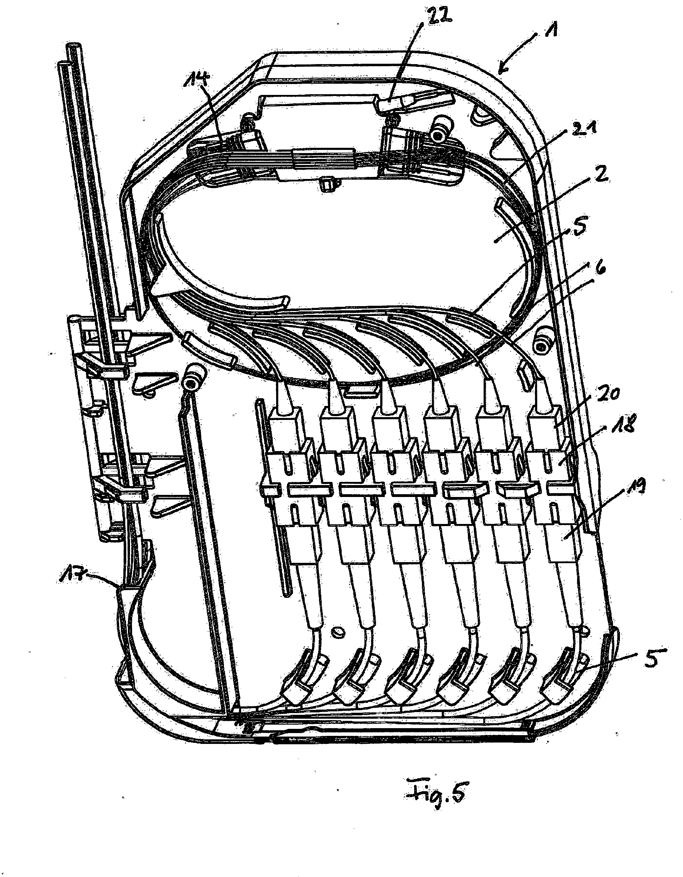

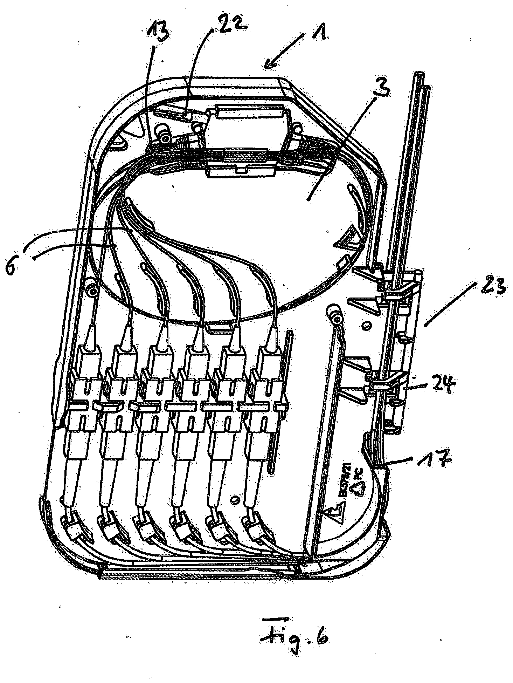

Die Figuren 5 und 6 zeigen die Kassette 1 mit allen wesentlichen Bauteilen. Bei der dargestellten Ausführungsform sind an jeder Seite sechs Glasfasern 6 angeordnet, von denen vier für die Übertragung optischer Signale einer bestimmten Frequenz vorgesehen sind und die beiden anderen einem alternativen Zweck dienen, beispielsweise als Prüfkabel. An der Kassette 1 ist ein Eingang/Ausgang 17 für die Glasfasern 6 ausgebildet, die über Führungselemente 5 zu Kupplungselementen 18 verlaufen, mit denen sie beidseitig über Stecker 19, 20 verbunden sind, bevor die weiterführenden Glasfasern 6 zunächst in einem losen Wickel 21 im Kreis geführt und dann mit den Glasfaser-Kontakten 14 verbunden werden.

Auf der Rückseite 3 verlaufen die Glasfasern 6 entsprechend zu den zugehörigen Glasfaser-Kontakten 13.

Der pWDM-Filter 7 enthält außerdem einen Glasfaser-Kabel-Kontakt 22 für das (nicht dargestellte) Glasfaser-Kabel, in das Signale aller Wellenlängen ausgekoppelt werden.

Um eine bequeme Handhabung der Glasfasern an beiden Seiten der Kassette 1 zu erleichtern, ist diese über ein Scharnier 23 schwenkbar auf einer nicht dargestellten schubladenartig ausziehbaren Platte eines Glasfaser-Verteilungsrahmens befestigt.

## Patentansprüche

1. Kassette (1), mit einer Grundplatte (4) und einem pWDM-Filter (7) für Glasfasern, wobei die Grundplatte (4) eine Vorderseite (2) und eine Rückseite (3) aufweist, **dadurch gekennzeichnet, dass** Glasfasern (6) an der Vorderseite (2) und der Rückseite (3) der Grundplatte (4) angeordnet sind, die zu dem pWDM-Filter (7) verlaufen,
dass der pWDM-Filter (7) an zwei diametral gegenüber liegenden Endbereichen (11, 12) mehrere Glasfaser-Kontakte (13,14) für die Glasfasern (6) der beiden Seiten (2,3) der Grundplatte (4) und einen Glasfaser-Kabel-Kontakt (22) für ein damit verbundenes Glasfaser-Kabel aufweist,
und dass der pWDM-Filter (7) derart in einer Aussparung (9) der Grundplatte (4) angeordnet ist, dass die Glasfaser-Kontakte (13,14) der gegenüber liegenden Endbereiche (11,12) des pWDM-Filters (7) von beiden Seiten der Kassette (1) aus für die Glasfasern (6) zum Anschluss zugänglich sind, so dass die Glasfasern (6) in die zugehörigen Kontakte (13,14) eingesteckt werden können.

2. Kassette nach Anspruch 1,
**dadurch gekennzeichnet,**
**dass** der pWDM-Filter (7) in der Ebene der Grundplatte (4) angeordnet ist und dass die Aussparung (9) der Grundplatte (4) an den zwei diametral gegenüber liegenden Endbereichen (11, 12) des pWDM-Filters (7) über die Glasfaser-Kontakte (13, 14) hinaus reicht.

3. Kassette nach Anspruch 1,
**dadurch gekennzeichnet,**
**dass** der pWDM-Filter (7) derart geneigt in der Aussparung (9) angeordnet ist, dass die Glasfaser-Kontakte (13,14) beider Endbereiche (11, 12) jeweils an einer Seite über die Grundplatte (4) hinaus ragen.

4. Kassette nach Anspruch 3,
**dadurch gekennzeichnet,**
**dass** die Aussparung (9) in der Grundplatte (4) über die Glasfaser-Kontakte (13, 14) hinaus reicht.

5. Kassette nach Anspruch 3,
**dadurch gekennzeichnet,**
**dass** die Aussparung (9) in der Grundplatte (4) nicht über die Glasfaser-Kontakte (13, 14) hinaus reicht.

6. Kassette nach einem der Ansprüche 3 bis 5,
**dadurch gekennzeichnet,**
**dass** der pWDM-Filter (7) um seine Mittelachse (A) bezüglich der Glasfaser-Kontakte (13, 14) beider Seiten (2,3) geneigt angeordnet ist.

7. Kassette nach einem der Ansprüche 1 bis 6,
**dadurch gekennzeichnet,**
**dass** der pWDM-Filter (7) auf wenigstens einer streifenförmigen Auflage (16) aufliegt und an der Grundplatte (4) angeschraubt ist.

8. Kassette nach einem der Ansprüche 1 bis 6,
**dadurch gekennzeichnet,**
**dass** der pWDM-Filter (7) an wenigstens einem in die Aussparung hineinragenden Ansatz der Grundplatte angeschraubt ist.

9. Kassette nach einem der Ansprüche 1 bis 8,
**dadurch gekennzeichnet,**
**dass** der pWDM-Filter (7) an beiden Endbereichen (11,12) jeweils vier Glasfaser-Kontakte (13,14) aufweist und
**dass** auf beiden Seiten (2,3) der Grundplatte (4) jeweils Führungselemente (5) für wenigstens vier Glasfasern (6) befestigt sind.

10. Kassette nach einem der Ansprüche 1 bis 9,
**dadurch gekennzeichnet,**
**dass** die Kassette (1) an einem Randabschnitt (24) schwenkbar auf einer schubladenartig ausziehbaren Platte eines Glasfaser-Verteilungsrahmens befestigt ist.

## Claims

1. A cassette (1) with a base plate (4) and a PWDM filter (7) for glass fibres, wherein the base plate (4) has a front side (2) and a rear side (3), **characterised in that** glass fibres (6) are arranged on the front side (2) and the rear side (3) of the base plate (4) which extend to the POWDM filter (7), that on two diametrically opposed end regions (11, 12) the PWDM filter (7) has a plurality of glass fibre contacts (13, 14) for the glass fibres (6) on the two sides (2, 3) of the base plate (4) and a glass fibre cable contact (22) for a glass fibre cable connected thereto and that the PWDM filter (7) is arranged in a recess (9) in the base plate (4) such that the glass fibre contacts (13, 14) on the opposed end regions (11, 12) of the PWDM filter (7) are accessible from both sides of the cassette (1) for the glass fibres (6) for connection so that the glass fibres (6) can be pushed in to associated contacts (13, 14).

2. A cassette as claimed in Claim 1, **characterised in that** the PWDM filter (7) is arranged in the plane of the base plate (4) and that the recess (9) in the base plate (4) extends beyond the glass fibre contacts (13, 14) at the two diametrically opposed end regions (11, 12) of the PWDM filter (7).

3. A cassette as claimed in Claim 1, **characterised in that** the PWDM filter (7) is arranged inclined in the recess (9) so that the glass fibre contacts (13, 14) on the two end regions (11, 12) project beyond the base plate (4) on a respective side.

4. A cassette as claimed in Claim 3, **characterised in that** the recess (9) in the base plate (4) extends beyond the glass fibre contacts (13, 14).

5. A cassette as claimed in Claim 3, **characterised in that** the recess (9) in the base plate (4) does not extend beyond the glass fibre contacts (13, 14).

6. A cassette as claimed in one of Claims 3 to 5, **characterised in that** the PWDM filter (7) is arranged inclined about its central axis (A) with respect to the glass fibre contacts (13, 14) on both sides (2, 3).

7. A cassette as claimed in one of Claims 1 to 6, **characterised in that** the PWDM filter (7) rests on at least one strip-shaped support (16) and is screwed to the base plate (4).

8. A cassette as claimed in one of Claims 1 to 6, **characterised in that** the PWDM filter (7) is screwed to at least one formation on the base plate projecting into the recess.

9. A cassette as claimed in one of Claims 1 to 8, **characterised in that** the PWDM filter (7) has four glass fibre contacts (13, 14) on each of the two end regions (11, 12) and that guide elements (5) for at least four glass fibres (6) are fastened to each of the two sides (2, 3) of the base plate (4).

10. A cassette as claimed in one of Claims 1 to 9, **characterised in that** the cassette (1) is pivotally fastened at an edge section (24) to a plate, which may be pulled out in the manner of a drawer, of a glass fibre distribution frame.

## Revendications

1. Cassette (1) avec une plaque de base (4) et un filtre de modulations d'impulsions en largeur (7) pour des fibres de verre,
dans laquelle la plaque de base (4) présente un côté avant (2) et un côté arrière (3), **caractérisée en ce que** des fibres de verre (6) sont agencées sur le côté avant (2) et le côté arrière (3) de la plaque de base (4) qui s'étendent vers le filtre de modulations d'impulsions en largeur (7), **en ce que** le filtre de modulations d'impulsions en largeur (7) présente sur deux zones d'extrémité (11, 12) diamétralement opposées plusieurs contacts de fibres de verre (13, 14) pour les fibres de verre (6) des deux côtés (2, 3) de la plaque de base (4) et un contact de câble de fibres de verre (22) pour un câble de fibres de verre relié avec celui-ci,
et **en ce que** le filtre de modulations d'impulsions en largeur (7) est agencé dans un évidement (9) de la plaque de base (4) de telle manière que les contacts de fibres de verre (13, 14) des zones d'extrémité (11, 12) se trouvant en face du filtre de modulations d'impulsions en largeur (7) soient accessibles depuis les deux côtés de la cassette (1) pour les fibres de verre (6) pour le raccordement de sorte que les fibres de verre (6) puissent être enfichées dans les contacts afférents (13, 14).

2. Cassette selon la revendication 1,
**caractérisée en ce que**
le filtre de modulations d'impulsions en largeur (7) est agencé dans le plan de la plaque de base (4) et **en ce que** l'évidement (9) de la plaque de base (4) parvient sur les deux zones d'extrémité (11, 12) diamétralement opposées du filtre de modulations d'impulsions en largeur (7) au-delà des contacts de fibres de verre (13, 14).

3. Cassette selon la revendication 1,
**caractérisée en ce que**
le filtre de modulations d'impulsions en largeur (7) est agencé incliné dans l'évidement (9) de telle manière que les contacts de fibres de verre (13, 14) de deux zones d'extrémité (11, 12) dépassent respectivement sur un côté au-delà de la plaque de base (4) .

4. Cassette selon la revendication 3,
**caractérisée en ce que**
l'évidement (9) parvient dans la plaque de base (4) au-delà des contacts de fibres de verre (13, 14).

5. Cassette selon la revendication 3,
**caractérisée en ce que**
l'évidement (9) ne parvient pas dans la plaque de base (4) au-delà des contacts de fibres de verre (13, 14) .

6. Cassette selon l'une quelconque des revendications 3 à 5,
**caractérisée en ce que**
le filtre de modulations d'impulsions en largeur (7) est agencé incliné autour de son axe médian (A) par rapport aux contacts de fibres de verre (13, 14) de deux côtés (2, 3).

7. Cassette selon l'une quelconque des revendications 1 à 6,
**caractérisée en ce que**
le filtre de modulations d'impulsions en largeur (7) repose sur au moins un appui (16) en forme de bande et est vissé sur la plaque de base (4).

8. Cassette selon l'une quelconque des revendications 1 à 6,
**caractérisée en ce que**
le filtre de modulations d'impulsions en largeur (7) est vissé sur au moins un épaulement pénétrant dans l'évidement de la plaque de base.

9. Cassette selon l'une quelconque des revendications 1 à 8,
**caractérisée en ce que**
le filtre de modulations d'impulsions en largeur (7) présente sur les deux zones d'extrémité (11, 12) respectivement quatre contacts de fibres de verre (13, 14) et **en ce que** sur les deux côtés (2, 3) de la plaque de base (4) respectivement des éléments de guidage (5) sont fixés pour au moins quatre fibres de verre (6).

10. Cassette selon l'une quelconque des revendications 1 à 9,
**caractérisée en ce que**
la cassette (1) est fixée sur une section de bord (24) de manière pivotante sur une plaque rétractable comme un tiroir d'un cadre de répartition de fibres de verre.
